# EUROPEAN PATENT APPLICATION

(11) **EP 4 406 884 A1**
(43) Date of publication of application: **31.07.2024**
(21) Application number: 23153671.5
(22) Date of filing: 27.01.2023
(51) Int. Cl.: B65G 21/06, H01R 25/16

(54) **CONNECTION ASSEMBLY**

(71) Applicant: OmniMod AS, 1364 Fornebu (NO)
(72) Inventor: WOELFERT, Bo Willem, 1364 Fornebu (NO); LIEN, Mathias, 1364 Fornebu (NO)
(74) Representative: Gill Jennings & Every LLP

(57) **Abstract**

A connection assembly for providing an electrical connection to a plurality of conveyor modules in a conveying system, the connection assembly comprising: a first housing part and a second housing part arranged to at least partially house a plurality of electrical components; and a plurality of apertures provided on the first housing part, wherein each aperture is associated with at least one of the plurality of electrical components, wherein the first and second housing parts each have an elongate configuration; wherein each aperture is configured to receive a part of a conveyor module to facilitate electrical connection of each of the plurality of conveyor modules to at least one of the plurality of electrical components; and wherein the plurality of apertures are spaced apart such that each of the received conveyor modules are arranged in a row.

## Description

### FIELD OF THE INVENTION

The present invention relates to a connection assembly for providing an electrical connection between a plurality of electrical components and a plurality of conveyor modules in a conveying system.

### BACKGROUND

A conveying system comprises a plurality of conveyor modules each having at least one rotatable element comprising an engagement surface for receiving an object to be conveyed. The conveying system also comprises a conveying frame having a plurality of apertures, each of which receives a conveyor module so as to form an array of conveyor modules that together provide a surface for conveying objects. The conveying frame comprises a control system configured to communicate with a control mechanism of the conveyor modules to control the rotatable elements.

The control system can be electrically connected to the control mechanism in a variety of different manners.

It is preferably that the manner in which the control system is electrically connected to the control mechanism is simple and cheap to manufacture.

### SUMMARY OF INVENTION

According to a first aspect there is provided a connection assembly for providing an electrical connection to a plurality of conveyor modules in a conveying system. The connection assembly comprises a first housing part and a second housing part arranged to at least partially encapsulate a plurality of electrical components. The connection assembly also comprises a plurality of apertures provided on the first housing part, wherein each aperture is associated with at least one of the plurality of electrical components. The first and second housing parts each have an elongate configuration. Each aperture is configured to receive a part of a conveyor module to facilitate electrical connection of each of the plurality of conveyor modules to at least one of the plurality of electrical components. The plurality of apertures are spaced apart such that each of the received conveyor modules are arranged in a row.

The connection assembly may form a rail onto which a plurality of conveyor modules may be attached in a line, in order to establish an electrical connection between the conveyor modules and electrical components. By at least partially housing electrical components within the first and second housing, the electrical components are at least partially protected from contaminants such as dust and water. In this way, the risk of electrical faults resulting from fluids and other contaminants is greatly reduced.

The electrical components may be electrical connection points. The electrical connection points may comprise PCT connectors and I or JST connectors. The electrical connection points may be arranged in an elongate configuration which may correspond at least partially to the elongate configuration of the first and second housing parts. In this way, the electrical components are arranged in a substantially linear manner, rather than in a grid-like manner. A linear arrangement may be more space efficient than a grid-like arrangement, and so the overall cost of manufacturing the electrical components and connection points is reduced. For example, when the electrical components are part of a PCB, an elongate PCB may be smaller than a square PCB, which means less wasted space, and so the cost of manufacturing the linear PCB is reduced. In some cases, the overall size of the electrical components, for example a PCB, may be reduced by up to 50%, more preferably up to 80%, more preferably up to 90%.

Each aperture may form part of an electrical socket configured to establish an electrical connection with an electrical connector of a conveyor module. The socket may be used to establish the electrical connection between the conveyor module and at least one of the electrical components.

In some examples, each aperture may be centrally located with respect to the width of the first housing part. This may ensure that the conveyor modules are received in a position that is substantially central with respect to the connection assembly. This allows a substantially straight connection assembly to be electrically connected to multiple conveyor modules in a row.

The first housing part may be formed of a polymer. The second housing part may be formed of a polymer. The first and second housing parts may be formed of plastic. These materials are cheap and effective materials for manufacturing components.

The first housing part may be formed using injection moulding. The second housing part may be formed using extrusion. Any suitable manufacturing process may be used to form the first and second housing parts. The first and second housing parts may be formed using the same or different manufacturing process.

Preferably, the elongate configuration is a straight configuration. The elongate configuration may be a substantially rectangular configuration. This configuration provides a simple and effective structure onto which conveyor modules can be mounted such that the mounted conveyor modules are arranged in a row. A straight configuration is also simple to manufacture, reducing overall costs.

In some examples, the plurality of apertures may be spaced apart in a linear configuration, for example the apertures may be arranged in a line along the first housing part.

In some examples, the apertures may be arranged in an alternating offset pattern along the first housing part. In some examples, electrical connection points may be arranged in an alternating off set pattern, substantially corresponding to the pattern of the apertures. In this disclosure, a linear arrangement of apertures may include apertures arranged in a straight line and apertures arranged in an offset pattern long a line. The same applies to connection points and sockets of the connection assembly.

In some arrangements, each aperture may comprise a raised perimeter. The perimeter may extend substantially around the entire perimeter of the aperture. The raised perimeter may act to at least partially shield or protect the aperture from debris and fluid ingress, which helps protect the electrical components that are within the connection assembly.

The raised perimeter may comprise a sloped portion. The sloped portion may help to ensure fluid or debris that comes into contact with the raised perimeter flows away from the aperture along the sloped sides. This may help avoid a build-up of fluid or debris around a based on the perimeter.

The raised perimeter may be integrally formed with the first housing part. This reduces the overall number of separate components and helps provide a stronger attachment point between the perimeter and the first housing part.

The first and second housing parts may be arranged to be attached together. The first and second housing parts may form a housing. The first and second housing parts may be attached together using an interlocking hook arrangement. Any other suitable arrangement may be used to attach the first and second parts together. In this way, the first and second housing parts may at least partially encapsulate the electrical components within the space created by the attached first and second housing parts, providing a secure environment in which to locate the electrical components. This also helps protect the electrical components from external factors which may damage the electrical components such as water or dust.

The interlocking hook arrangement may extend along at least part of the length of both the first and second housing parts. Preferably, the interlocking hook arrangement extends along substantially the entire length of both the first and second housing parts. This provides a secure attachment mechanism which helps ensure that the first and second housing parts remain attached together.

The connection assembly of any preceding claim wherein the plurality of electrical components are alternately arranged such that the orientation of adjacent electrical components is different.

The connection assembly may comprise a plurality of connectors configured to attach the connection assembly to a conveying frame of a conveying system. The connectors may help ensure that the connection assembly remains in place relative to the conveying frame, which may help maintain the electrical connection between the conveyor module and the connection assembly when the conveyor module is mounted in the conveying frame.

In some examples, the plurality of connectors may comprise snap-fit hooks. Any suitable mechanism for connecting the connection assembly to a conveying frame may be used, for example interlocking hooks or interlocking flanges. These provide simple and effective means of connecting the assembly to the conveying frame. Snap-fit hooks also allow the connection assembly to be attached to the conveying frame without the use of additional components (e.g. screws) or additional tools.

Preferably, the plurality of connectors may be located on the first housing part. In some examples, the plurality of connectors may be arranged in pairs along at least part of the length of the first housing part. Arranging the connectors in pairs may provide a more secure means of attaching the connection assembly to the conveying frame.

The connectors and apertures may be alternately arranged along at least part of the length of the first housing part. For example, each connector may have an aperture on either side of the connector and/or vice versa. This may ensure that there are enough connectors along the length of the first housing part such that the first housing part is securely attached to the conveying frame.

There may be provided a conveyor module arranged to form a connection with a connection assembly as described above. The conveyor module may comprise at least one rotatable element comprising an engagement surface configured to engage with a surface of an object to be conveyed; a driving mechanism configured to rotate the at least one rotatable element such that rotation of the at least one rotatable element causes rotation of the engagement surface and thereby movement of the object; and a control mechanism configured to control rotation of the rotatable element; wherein the driving mechanism and the control mechanism are arranged in vertical alignment.

In use, the control mechanism may be located below the driving mechanism. Preferably, at least part of the control mechanism may be arranged to be received by the aperture in the connection assembly.

The driving mechanism is preferably a motor.

Preferably the connection formed between the conveyor module and the connection assembly comprises an electrical connection. The electrical connection may be formed between the conveyor module, for example the control mechanism of the conveyor module, and at least one electrical component within the connection assembly.

Preferably, the conveyor module further comprises a casing, wherein the casing may be configured to at least partially house the control mechanism and at least partially house the driving mechanism. The casing may protect the driving mechanism and the control mechanism from damage due to fluid or dust, for example.

The control mechanism may extend at least partially through the casing and may be arranged to form an electrical connection to at least one of the plurality of electrical components of the connection assembly.

The conveyor module may comprise a through passageway extending between a first opening in a top part of the conveyor module and second opening in a chute. The chute is preferably configured to extend away from the conveyor module. This may ensure that debris that collects within the through passageway can pass through the conveyor module out of the chute, without being deposited or interfering with the connection assembly.

In some examples, the chute may extend across less than half the length of a side of the conveyor module. This ensures that the chute does not interfere with the connection assembly when the conveyor module is electrically connected to the connection assembly.

There may be provided a connecting rail for a conveying system comprising a plurality of connection points linearly arranged along the connecting rail, wherein each connection point is arranged to receive a control mechanism of a conveyor module.

There may be provided a conveying system for conveying objects comprising: a plurality of conveyor modules, each conveyor module comprising: at least one rotatable element comprising an engagement surface configured to engage with a surface of an object to be conveyed; a control mechanism configured to control rotation of the rotatable element; and a conveying frame comprising: a plurality of apertures, each aperture configured to receive a conveyor module so as to form an array of conveyor modules that together provide a substantially planar surface for conveying objects; and a control system configured to communicate with the control mechanism of the conveyor module; wherein the control system comprises a connecting rail having a plurality of connection points arranged along the connecting rail; and wherein each connection point is arranged to receive a control mechanism of a conveyor module.

It will be understood by a skilled person that any apparatus feature described herein may be provided as a method feature, and vice versa. It will also be understood that particular combinations of the various features described and defined in any aspects described herein can be implemented and/or supplied and/or used independently. Furthermore, as used herein, any "means plus function" features may be expressed alternatively in terms of their corresponding structure.

### BRIEF DESCRIPTION OF DRAWINGS

Examples of the invention will be described with reference to the accompanying drawings in which:
Figure 1 is a perspective view of a conveyor module;
Figure 2 is a perspective view of part of a conveyor module;
Figure 3 is cross sectional view of part of a conveyor module;
Figure 4 is a cross sectional view of a conveyor module;
Figure 5 is a perspective view of a conveying frame;
Figure 6 is a perspective view of a conveying module and part of a conveying frame;
Figure 7 is a perspective view of a conveying module and part of a conveying frame;
Figure 8 is a perspective view of part of a connection assembly;
Figure 9 is an end view of part of a connection assembly;
Figure 10 is a side view of a connection assembly;
Figure 11 is a perspective view of two conveying modules, part of a conveying frame, and a connection assembly;
Figure 12 is a bottom-up view of two conveyor modules;
Figure 13 is a perspective view of a conveyor module and part of a connection assembly;
Figure 14 is a perspective view of part of a connection assembly;
Figure 15 is an end view of part of a connection assembly;
Figure 16 is a side view of a connection assembly;
Figure 17 is a top down view of a connection assembly; and
Figure 18 is a side view of two conveying modules, part of a conveying frame, and a connection assembly.

### DETAILED DESCRIPTION

A conveying system is used for moving objects around on a surface of the conveying system. In the following description, a package will be used as an example of a type of object that may be moved using the conveying system. Generally, the conveying system comprises a plurality of conveyor modules and a conveying frame. Each conveying module comprises at least one rotatable element having an engagement surface that is configured to engage with a surface of a package. Each conveying module also has a driving mechanism configured to rotate the at least one rotatable element. In this way, rotation of the at least one rotatable element causes rotation of the engagement surface and thereby effects movement of the package on the engagement surface. A control mechanism of the conveying module is configured to control rotation of the rotatable element via the driving mechanism and communicate with a control system which is generally external to the conveyor module.

Generally, the conveying frame comprises a plurality of apertures. Each aperture is configured to receive a conveyor module so as to form an array of conveyor modules. Together, the array of conveyor modules provides a substantially planar surface for conveying packages. Each conveyor module is configured to be releasably mounted within an aperture of the conveying frame. By mounting a conveyor module within an aperture, an electrical connection between the conveyor module and the control system is established, thus facilitating electrical communication between the control system and the mounted conveyor module.

In use, a package resting on the engagement surface of the conveyor module is moved across the substantially planar surface created, through rotation of the rotatable elements so that the package is moved from an engagement surface of one conveyor module to an engagement surface of an adjacent conveyor module. This has the effect that the package is moved across the substantially planar surface.

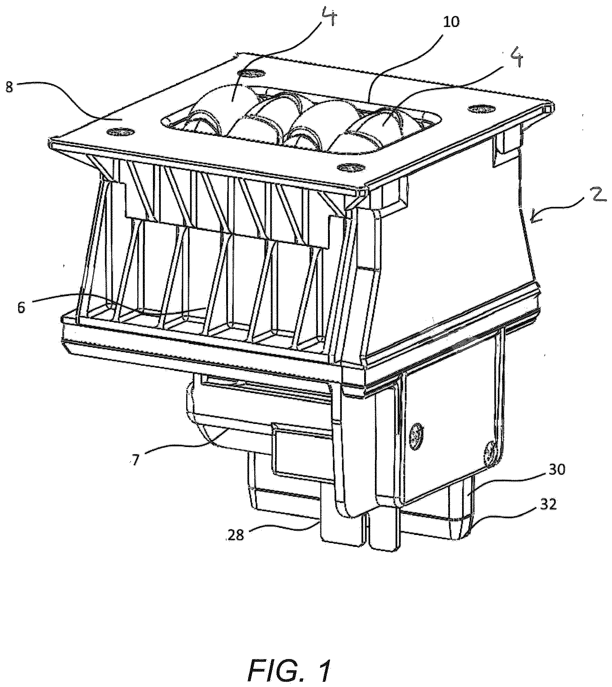

An exemplary conveyor module 2 is illustrated in Figure 1. The conveyor module 2 may be referred to as a motorised wheel system (MWS). Generally, the conveyor module 2 is a singular unit that includes rotatable elements in the form of two actuated omnidirectional wheels 4. These wheels 4 allow a force to be applied on a package in one direction while also allowing a package to passively roll over the omnidirectional wheels 4 in the perpendicular direction.

The conveyor module 2 comprises a control mechanism 28 which takes the form of a printed circuit board (PCB). The control mechanism 28 is connected to a motor 20 so that the control mechanism 28 can control the rotation of the omnidirectional wheels 4.

The control mechanism 28 is also arranged to communicate with a control system that is external to the conveyor module 2, typically part of the conveying frame. In this way, the control mechanism 28 can receive commands from the control system and control the motor 20 accordingly.

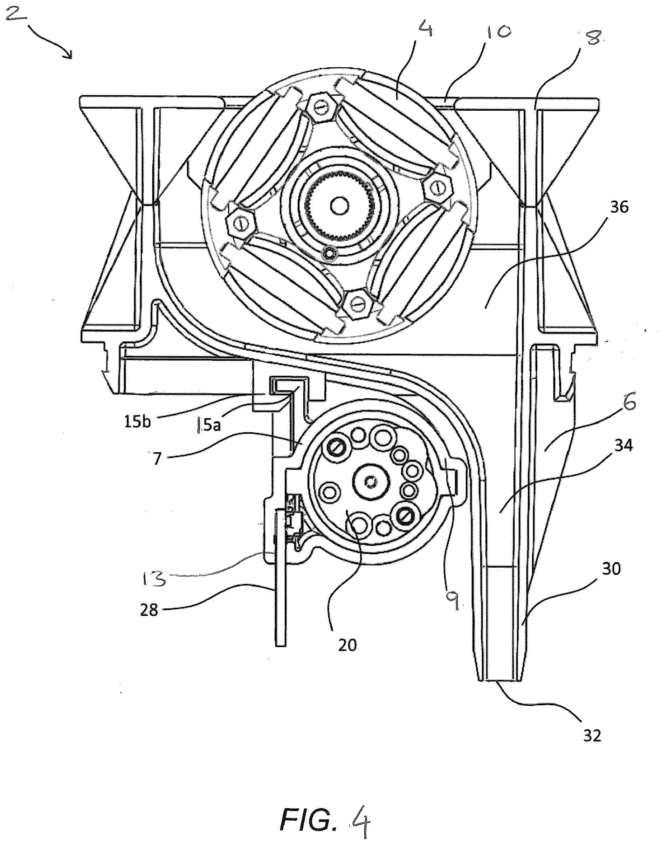

As illustrated in Figure 4, a housing 6 of the conveyor module 2 comprises a chute 30 projecting away from the main body of the conveyor module 2 from the bottom of the housing 6. Here, the bottom of the housing 6 corresponds to the part of the housing 6 opposite a top lid 8.

The chute 30 comprises a passageway 34 which extends into the main body of the conveyor module 2 to a chamber 36 in which the omnidirectional wheels 4 are located to allow them to rotate freely. The chamber 36 fluidly connects with an aperture 10 in the top lid 8 of the conveyor module 2. The chute 30 acts as a water and dust drainage system, allowing dust and water which enters the aperture 10 to flow through the chamber 36 and passageway 34, and out of the chute 30 via an opening 32. In use, the passageway 34 of the conveyor module 2 will be substantially vertical. This has the advantage that any debris collected in the chamber 36 is able to flow downwards through the passageway 34, under the action of gravity, and out the opening 32 in the chute 30. This avoids debris, in particular water and dust, building up within the chamber 36, or space, which surrounds the omnidirectional wheels 4 which could affect rotational movement of the wheels 4. The conveyor module 2 can therefore be thought of as comprising a through passageway which extends between a first opening at the top of the conveyor module 2 (i.e. the aperture 10 in the top lid 8) and a second opening at the base of the conveyor module (i.e. the opening 32 of the chute 30). The omnidirectional wheels 4 are located at least partially within this through passageway.

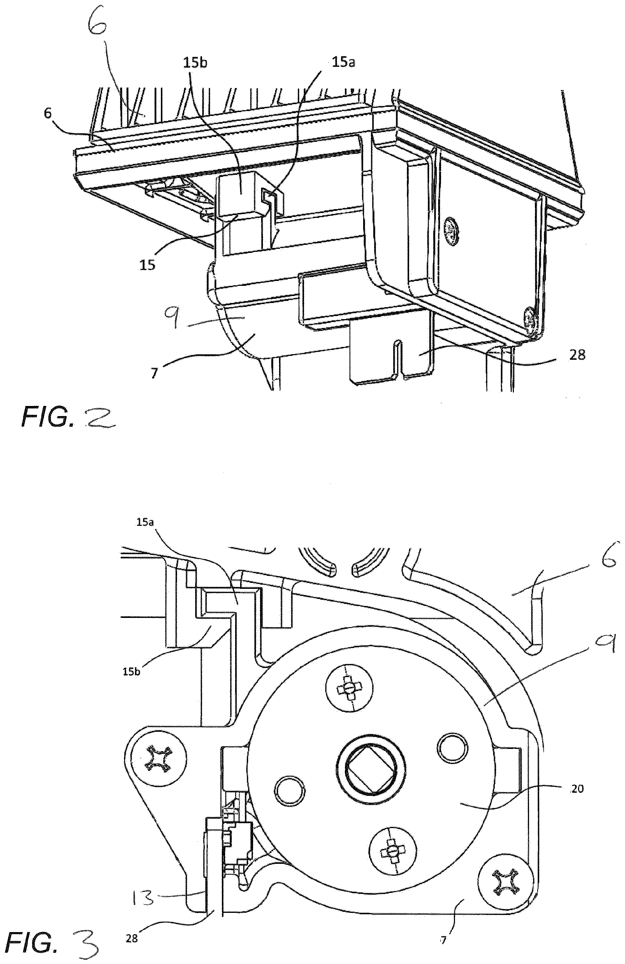

As illustrated at least in Figures 2 and 3, the motor 20 and at least part of the control mechanism 28 are located within a casing 7, which is separate from the housing 6. In this way, the motor 20 and the control mechanism 28 are independent of the housing 6.

The casing 7 comprises a generally cylindrical body 9 for receiving the motor 20. The casing 7 also comprises a channel 13 for receiving at least a portion of the control mechanism 28, as shown in Figures 3 and 4. Placing the motor 20 and part of the control mechanism 28 in a casing 7 that is separate from the housing 6 provides easier access to both the motor 20 and the control mechanism 28 allowing fast replacement of these components. This advantage can be seen at least from Figure 2 which shows that the casing 7 is external to the housing 106 and accessible independently from the housing 6.

The casing 7 can be secured to the housing 6 using an interlocking mechanism 15 comprising a first hooked protrusion 15a located on the casing 7 and a second hooked protrusion 15b located on the housing 6. The first and second hooked protrusions 15a, 15b are arranged to releasably engage with each other in order to releasably secure the casing 7 to the housing 6. The use of a separate casing 7 and an interlocking mechanism 15 reduces the overall complexity of the housing 6 which in turn reduces manufacturing and material costs. Furthermore, isolating the control mechanism 28 from the housing 6 by placing it within a separate casing 7 allows for replacement of the casing 7 if the control mechanism 28 fails, rather than the whole housing 6. This improves the useable lifetime of the conveyor module 2.

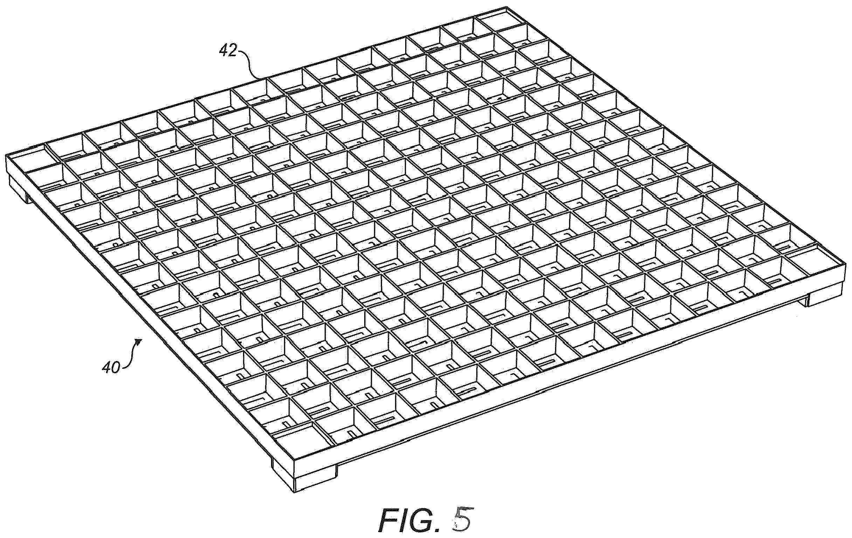

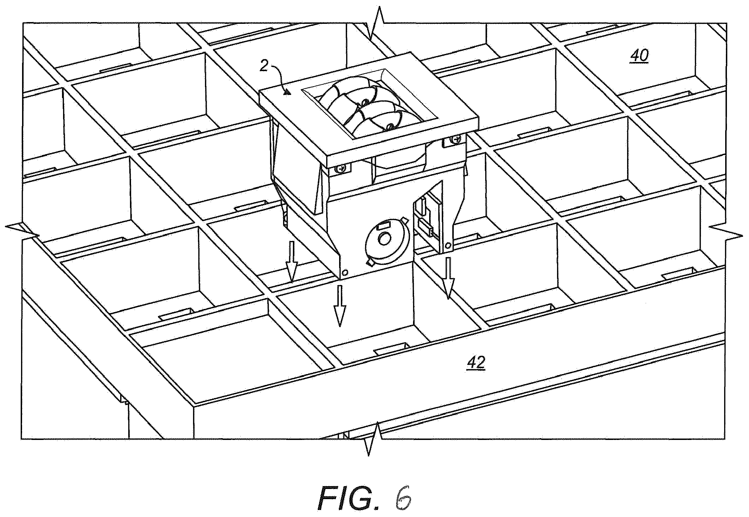

Turning now to Figure 5, an exemplary conveying frame 40 is shown in the form of a metal grid frame. The conveying frame 40 comprises a plurality of apertures 42, regularly arranged in a grid-like manner across the conveying frame 40. The apertures 42 of the conveying frame 40 are each for receiving a conveyor module 2 as illustrated in Figure 6, forming an array of conveyor modules 2 that together form a conveying surface for transporting packages received on this surface. The conveying frame 40 therefore acts as a support structure for holding many conveying modules 2 together in order to form a transport surface over which packages can be transported.

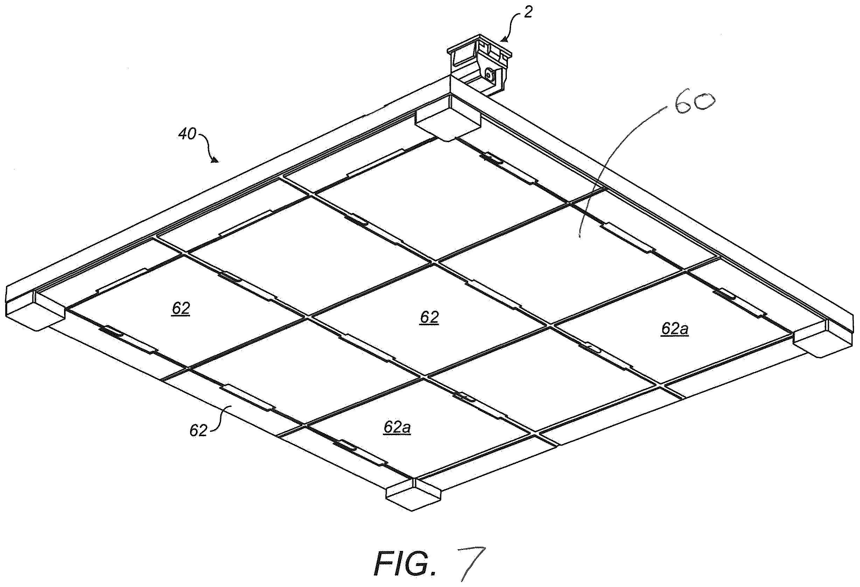

A control system 60 is arranged to communicate with a main control system as well as each conveyor module 2. The control system 60 forms part of the conveying frame 40 and takes the form of a PCB system comprising a plurality of PCBs 62, as shown in Figure 7. The PCBs 62, which may also be referred to as Mod-PCBs (module PCBs) are generally square in shape, sized to cover multiple apertures 42. For example, a PCB 62a may have an area sized to cover 4x4 apertures 42 in the conveying frame 40. Of course, any *n* × *n* arrangement can be used. This arrangement of PCBs 62 covers the whole area of the conveying frame 40. The multiple PCBs 62 can be connected together using wires. The control system 60 is connected to a main power supply which may be located underneath the conveying frame 40.

As mentioned previously, each conveyor module 2 is designed to be inserted into an aperture 42 in the conveying frame 40, as shown in Figure 6, in order to form a transporting surface made up of multiple conveyor modules 2.

The conveyor module 2 is designed such that when the conveyor module 2 is inserted into an aperture 42 of the conveying frame 40, the control mechanism 28 of the conveyor module 2 will automatically electrically connect with the control system 60, in particular the PCB 62, of the conveying frame 40. This therefore has the effect that when the conveyor module 2 is inserted into an aperture 42 of the conveying frame 40, the control mechanism 28 of the conveyor module 2 will automatically connect with the main control system, via the electrical connection with the control system 60 of the conveying frame 40.

Automatically establishing an electrical connection between the conveying module 2 and the conveying frame 40 upon insertion of the conveyor module 2 into the conveying frame 40 means that an electrical connection is automatically established between the conveying module 2 and the main control system upon insertion of the conveyor module 2 into the conveying frame 40.

Each PCB 62 on the underside of the conveying frame 40 is connected to a plurality of conveyor modules 2 above the PCB 62 as well as being connected to the main power supply and control systems below the PCB 62. In this way, each conveyor module 2 is connected to the main power supply and control system via the PCBs 62 of the conveying frame 40.

When the conveyor module 2 is inserted into the aperture 42, a portion of the control mechanism 28 is arranged to connect with the PCB 62, thus connecting the control mechanism 28 of the conveyor module 2 to the control system 60 of the conveying frame 40.

A problem with the above-described arrangement is that the control system 60, in particular the PCBs 62 are exposed to the external environment and so the control system is at risk of damage from fluids and other contaminants which can lead to electrical faults.

In addition, the control system 60 having large PCBs 62 covering an *n* x *n* area of apertures (where *n* is greater than 1) results in a relatively large PCB which can be expensive to manufacture.

To address these issues, the control system 60 described above can be modified as will be discussed in the following.

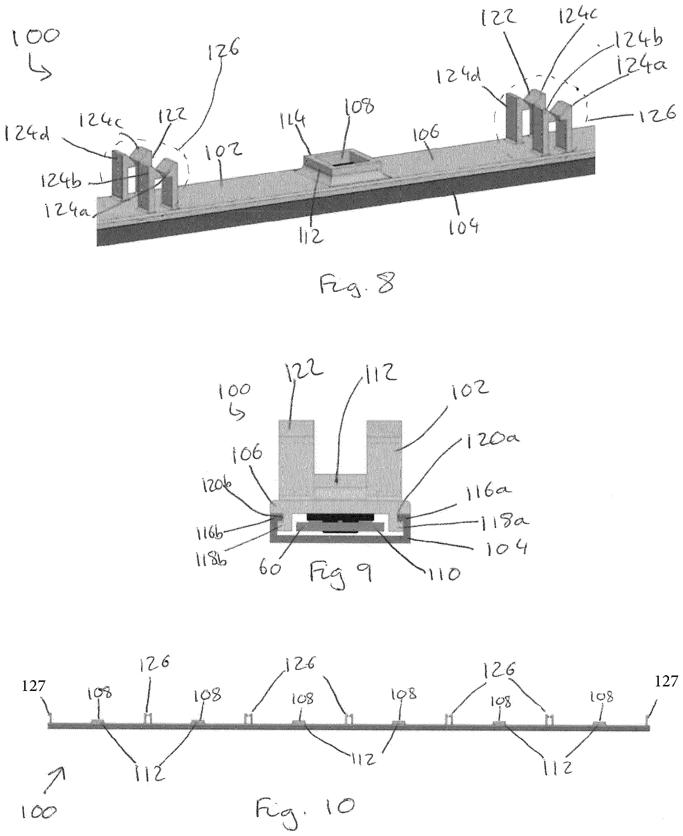

With reference to Figures 8 and 9, a connection assembly 100 is illustrated. The connection assembly 100 is for providing an electrical connection between the conveyor modules 2 and the control system 60 of the conveying frame 40 such that the control mechanism of the conveying module 2 (which controls rotation of the rotatable element 4) is able to communicate with the control system 60.

Generally, the connection assembly 100 comprises a first housing part 102 and a second housing part 104 which are arranged to at least partially house a plurality of electrical components. In this way, the electrical components can be considered as being at least partially encapsulated by the first and second housing parts 102, 104. The first and second housing parts 102, 104 act together to form a housing 106. In use, the first housing part 102 is located above the second housing part 104 and so the first housing part 102 can also be referred to as an upper housing part and the second housing part 104 can also be referred to as a lower housing part.

As shown in Figure 9, the first and second housing parts 102, 104 are arranged to attach to each other in order to form the housing 106. In the example shown in Figure 9, the first and second housing parts 102, 104 are attached together using an interlocking hook arrangement. In this case the second housing part 104 comprises two hooked portions 116a, 116b extending away from the main body of the second housing part 104, which is an upwards extension when the connection assembly is in use. The hooked portions 116a, 116b are located on either side of the second housing part 104 and extend along substantially the entire length of the second housing part 104. The first housing part 102 also comprises two hooked portions 118a, 118b extending downwards when the connection assembly 100 is in use. Each hooked portion 118a, 118b forms a corresponding groove 120a, 120b. The grooves 120a, 120b and hooked portions 118a, 118b are located on either side of the first housing part 102 and extend along substantially the entire length of the second housing part 102.

The hooked portions 118a, 118b on the first housing part 102 are sized and shaped to cooperate with the hooked portions 116a, 116b on the second housing part 104. In this way, when the first and second housing parts 102, 104 are connected together, the hooked portions 116a, 116b on the second housing part 104 interlock with the hooked portions 118a, 118b on the second housing part 104 so that the hooked portions 116a, 116b on the second housing part 104 are retained in the grooves 120a, 120b as shown in Figure 9.

Although the hooked portions have been described as extending along substantially the entire length of the first and second housing parts 102, 104, in some examples the hooked portions may extend part way along the first and second housing parts 102, 104 or there may be a series of (i.e. multiple) spaced apart hooked portions on each of the first and second housing parts 102, 104.

Any other suitable arrangement for attaching the first and second housing parts 102, 104 can be used, for example a snap fit arrangement.

The housing 106, namely the first and second housing parts 102, 104, is formed of a polymer. The first housing part 102 is formed by injection moulding and the second housing part 104 is formed by extrusion. Any other suitable process for manufacturing the first and second housing parts 102, 104 can be used.

As shown in Figure 8, the first housing part 100 comprises a plurality of apertures 108, each aperture 108 corresponding to at least one of the electrical components. Each aperture 108 is configured to receive part of a conveyor module 2 and facilitate electrical connection between the conveyor module 2 and the electrical components.

The first and second housing parts 102, 104 each have an elongate configuration. More particularly, the first and second housing parts 102, 104 have a substantially straight, rectangular form. The plurality of apertures 108 are spaced apart in a linear configuration, for example as shown in Figure 10, so that when conveyor modules 2 are received in each of the apertures 108, the conveyor modules 2 are arranged in a line or row along the first housing part 102. In the example shown in Figure 10, the apertures 108 are equally spaced apart.

The electrical components housed by the first and second housing parts 102, 104 form part of the control system 60 in particular the PCB 110 of the control system 60. Figure 9 shows the PCB 110 located within the housing 106. In this example, the PCB 110 also has an elongate configuration that substantially corresponds to the shape of the first and second housing parts 102, 104 in order that the PCB 110 can be housed within the first and second housing parts 102, 104.

Each aperture 108 on the first housing part 102 forms part of an electrical socket 112 configured to establish an electrical connection between the conveyor module 2 and the conveying frame 40. The electrical socket 112 enables an electrical connection to be formed with an electrical connector of the conveyor module such that electrical communication is established between the conveyor module and at least one of the electrical components.

Each aperture 108 is substantially surrounded by a raised perimeter, which may also be referred to as a berm. The raised perimeter acts as a collar which prevents debris and fluid from entering the housing 106 through the aperture 108 and contacting the PCB 110 and electrical components within.

As before, the PCB 110 is arranged to contact and make an electrical connection with the control mechanism 28 of the conveyor module 2 when the conveyor module 2 is inserted into an aperture 42 of the conveying frame 40. The control mechanism 28 of the conveyor module 2 therefore forms the electrical connector of the conveyor module 2.

In order that the control mechanism 28 of the conveyor module 2 can connect with the PCB 110, each connection point on the PCB 110 that makes the electrical connection with the control mechanism 28 is located substantially below an aperture 108 of the first housing part 102. In this way, each aperture 108 can be associated with one of the connection points. As such, there are the same number of apertures 108 as there are connection points. The electrical socket 112 is formed by at least the combination of the aperture 108 and its associated connection point.

In some examples, the connection point on the PCB 110 of the connection assembly 100 comprises a PCI connector which is arranged to receive at least part of the control mechanism 28, for example a PCB forming part of the control mechanism 28, of the conveyor module 2. In other examples, the connection point on the PCB 110 of the connection assembly 100 comprises a JST connector which is arranged to receive at least part of the control mechanism 28 of the conveyor module 2.

As before, each conveyor module 2 is configured to be releasably mounted within an aperture 42 of the conveying frame 40 which establishes an electrical connection between the conveyor module and the control system of the conveying frame 40. However, in this arrangement, instead of the PCB being associated with *n* × *n* apertures 42 of the conveying frame 40, the PCB 110 is associated with 1 × *n* apertures 42 of the conveying frame 40. The PCB therefore connects several conveyor modules 2 in a row rather than in a grid.

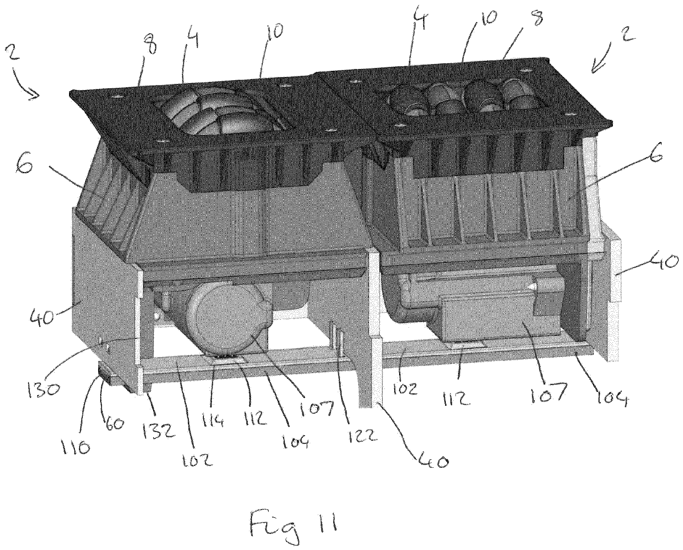

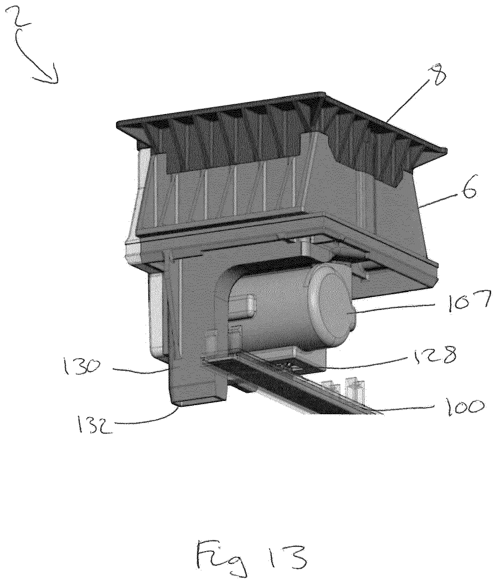

As can be seen in Figures 10 and 13, the connection assembly 100 comprises connectors 122 which allow the connection assembly 100 to be attached to the conveying frame 40. In the example illustrated, the connectors 122 take the form of a plurality of snap-fit hooks 124a, 124b, 124c, 124d (which may also be collectively referred to as snap-fit hooks 124). The snap-fit hooks 124 are arranged in two sets of inwardly facing pairs (in this case, a first pair of hooks 124a, 124b and a second set of hooks 124c, 124d) such that a portion of the conveying frame 40 can be inserted between the two pairs. An arrangement of two sets of hooks 124 may be referred to as a group of snap-fit hooks 126. Protrusions on each end of the snap-fit hooks slot into (or snap into) corresponding slots on the conveying frame, as can be seen in Figure 11, such that the connection assembly 100 is held in place relative to the conveying frame 40 and attached to the conveying frame 40 by the hooks 124.

The snap-fit hooks 124 are located on the first housing part 102, extending upwardly away from the first housing part 102. As shown in Figure 10, the apertures 108 and the groups of hooks 126 are alternately arranged along at least part of the length of the first housing part 102. In this way, a group of hooks 126 is located between a pair of apertures 108. At the end of the first housing part 102, instead of a group of hooks 126, there are two half-pairs 127. These half-pairs 127 connect to the conveying frame 40 in the same manner as previously described, as can be seen in Figure 11.

The connectors 122 attach the connection assembly 100 to the conveying frame 40 such that the connection assembly is located substantially centrally with respect to the apertures 42 of the conveying frame. In this way, the apertures 108 of the housing 106 are located substantially centrally, in the x- and y- directions, within the apertures 42 of the conveying frame 40. Additionally, each aperture 108 is located substantially centrally with respect to the width of the first housing part 102. Since each aperture 108 forms part of each socket 112, it follows that each socket 112 is located centrally within the apertures 42 of the conveying frame 40 and located substantially centrally with respect to the width of the first housing part 102.

Referring back to the previous example shown in, for example, Figure 4, the control mechanisms 28 of the conveyor module 2 is offset relative to a centreline of the conveyor module 2. Since the aperture 108 of the connection assembly 100 is located substantially centrally with respect to the aperture of the conveying frame 40 (as described above), certain modifications need to be made to the conveyor module in order that the control mechanism 28 of the conveyor module 2 can establish an electrical connection with the PCB 110 of the connection assembly 100 when the conveyor module 2 is mounted within an aperture 42 of the conveying frame 40.

In particular, modifications are made to the casing 107 such that the control mechanism 128 is located centrally in the x- and y- directions within the conveyor module 2. The modified casing 107 enables the control mechanism 128 to be located underneath the motor 20 rather than next to the motor 20 (as was the case in Figure 4).

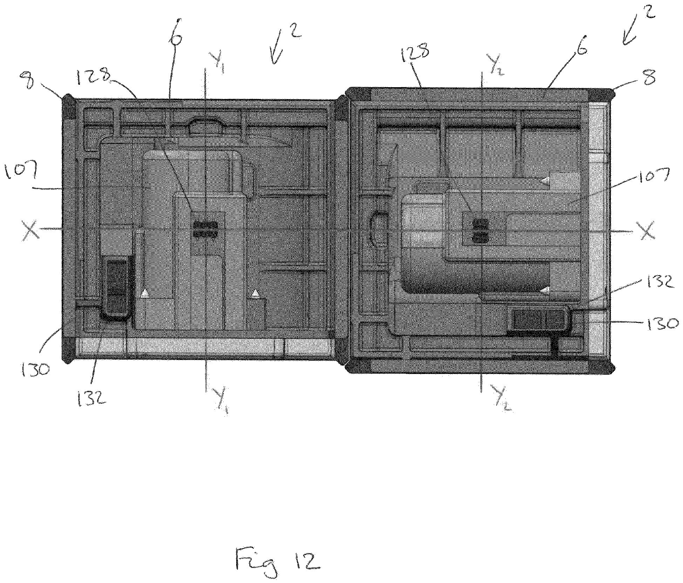

Figure 12 shows the underside of two conveyor modules, each conveyor module having a control mechanism 128 within a casing 107. Line X-X on Figure 12 is a centreline passing through the conveyor modules 2 along the x-axis. Lines Y₁-Y₁ and Y₂-Y₂ illustrate centrelines passing through each conveyor module 2 along the y-axis. In the case, the x- and y- axes are perpendicular and both in the horizontal plane. As can be seen, each control mechanism 128 is located on the centrelines. In this way, the control mechanism 128 is located centrally within the aperture 42 of the conveying frame 40 and so therefore is in alignment with the socket 112 (including the aperture 108 and PCB connection points) of the connection assembly 100.

As can also been seen at least partially in Figures 11 and 12, adjacent conveyor modules 2 are alternatively arranged, rotated 90 degrees with respect to one another. This alternating arrangement provides better tessellation of the conveyor modules 2 when they are mounted within the conveying frame 40. As a result of this alternating arrangement, the orientation of adjacent control mechanisms 128 are also alternating and rotated 90 degrees with respect to each other. This means that the connection points on the PCB 110 must also be alternately rotated 90 degrees with respect to each other in order than the control mechanisms 128 can form an electrical connection with the PCB 110.

Referring back again to the previous example shown in, for example, Figures 1 and 2, the chute 30 extends across substantially the whole length of one side of the conveyor module 2. In order to avoid potential interference between the chute 30 and the connection assembly 100 when the conveyor module 2 is mounted within the conveying frame 40 and the connection assembly 100 is attached to the conveying frame 40, certain modifications need to be made to the chute to ensure that the control mechanism 28 of the conveyor module 2 can establish an electrical connection with the PCB 110 of the connection assembly 100 when the conveyor module 2 is mounted within an aperture 42 of the conveying frame 40.

Figure 13 illustrates an example of a modified chute 130. In this example, the width of the chute 130 has been reduced, compared to the width of the previous chute 30, so that the modified chute 130 extends only part of the length of one side of the conveying module 2. For example, the modified cute 130 may extend less than half the length of one side of the conveying module 2, as illustrated in Figure 12 . This arrangement allows the modified chute 130 to pass the connection assembly 100 and extend down one side of the connection assembly 100, as shown in Figure 13. The modified chute 130 functions in the same way as before in that when the conveyor module 2 is inserted into the aperture 42, the chute 130 extends passed the connection assembly 100 and an opening 132 at the end of the chute 130 also extends passed the connection assembly 100 to allow dust and water to drain from inside the housing 6 of the conveyor module 2 to the outside. Since the PCB 110 and connection points are located within the connection assembly 100, the arrangement of the modified chute 130 also ensures that the exhausted dust and water are not deposited on the PCB and do not come into contact with any of the electrical components.

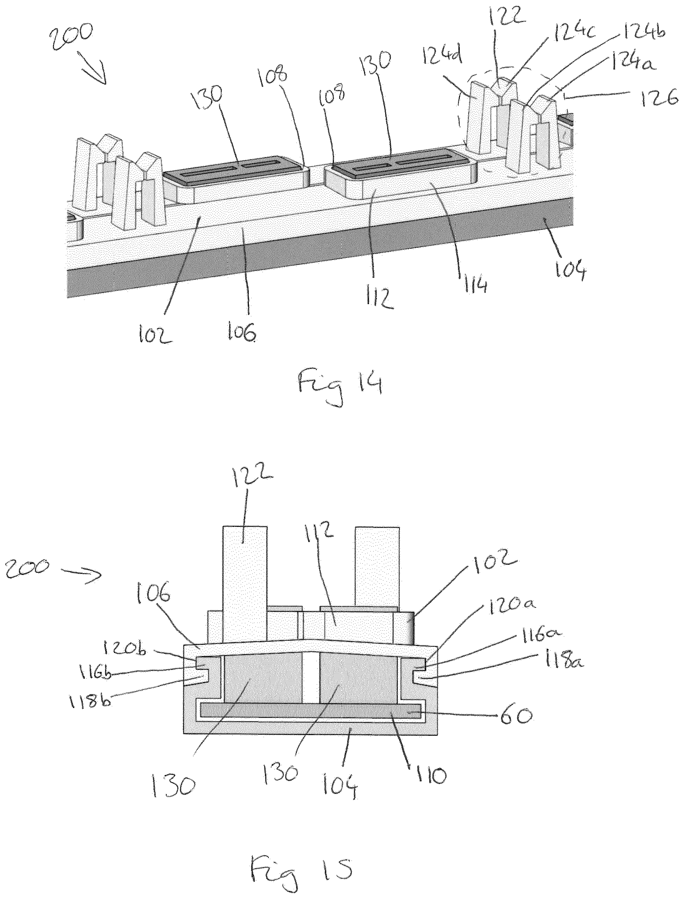

Figure 14 shows an alternative arrangement of a connection assembly 200. The connection assembly 200 generally comprises features which are similar to and function in the same way as described in relation to the previous connection assembly 100.

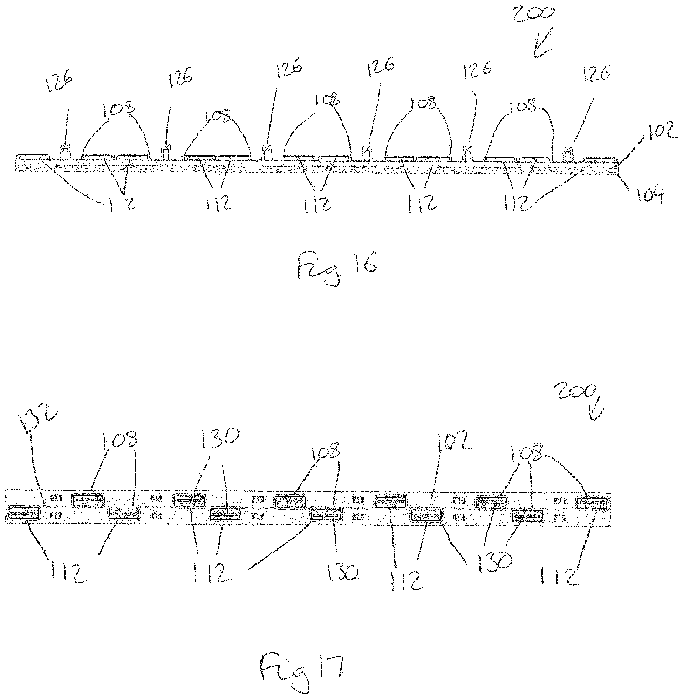

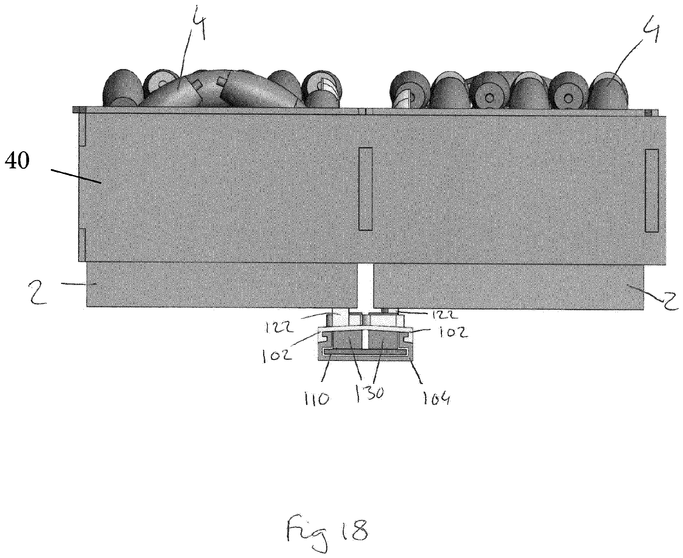

As before, the connection assembly 200 comprises apertures 108, each aperture 108 corresponding to at least one of the electrical components. The plurality of apertures 108 are spaced apart from each other along the elongate first housing part 102, for example as shown in Figure 17. The apertures 108 are arranged alternately offset from each other along the length of the first housing part 102. In other words, with respect to a centreline 132 of the first housing part 102, adjacent apertures are alternately located on one side of the centreline 132 and the other side of the centreline 132. When the conveyor modules 2 are received in each of the apertures 108, the conveyor modules 2 are arranged in a line or row along the first housing part 102. In this case, instead of having the control mechanism 128 located substantially central in relation to the conveyor module (as shown in Figure 12), the control mechanism is off set to one side (for example as shown in Figures 1-4), as can be seen in Figure 18.

As before, the electrical components of the control system 60, in particular the PCB 110, are at least partially housed by the first and second housing parts 102, 104 as shown in Figure 15. The apertures 108 form part of an electrical socket 112 for establishing an electrical connection between the conveyor module 2 and the conveying frame 40 in the same way as before.

As previously described, in order for the control mechanism 28 of the conveyor module 2 to connect with the PCB 110, each connection point 130 on the PCB 110 that makes the electrical connection with the control mechanism 28 is associated with an aperture 108. Each connection point 130 is located substantially below an aperture 108 of the first housing part 102. In the example illustrated in Figures 14 and 15, at least part of the connection point 130 extends away from the PCB 110 through the aperture 108. In this case, the connection point 130 may take the form of a PCI connector. In other examples, the connection point 130 on the PCB 110 may comprises a JST connector. In some examples, the connection point does not extend through the aperture 108.

The connection assembly 200 comprises connectors 122, as shown in Figure 14, which allow the connection assembly 200 to be attached to the conveying frame 40 in the same manner as described previously. As shown in at least Figure 16, two apertures 108 are located between the groups of hooks 126, one aperture 108 located on one side of the centreline 132 of the first housing part 102 and the other aperture 108 located on the other side of the centreline 132 of the first housing part 102.

The connectors 122 attach the connection assembly 200 to the conveying frame 40 such that the connection assembly 200 is located substantially centrally between two apertures 42 of the conveying frame 40, as shown in Figure 18. In this way, one connection assembly 200 is associated with two adjacent rows (or columns) of apertures in the conveying frame 40. The off-set arrangement of apertures 108 facilities one connection assembly 200 being usable with two adjacent rows or columns. For example, the apertures 108 that are off set on one side are associated with a first row (or column) and the apertures 108 that are off set on the other side are associated with an adjacent row (or column). This arrangement reduces the number of connection assemblies that need to be used with a conveying frame 40. For example the number of connection assemblies can be reduced by half when using the connection assembly 200 in Figures 14-18 compared to the connection assembly 100 illustrated in Figures 8 to 13. To enable to conveyor modules 2 to be received by the apertures 108 and form an electrical connection with the PCB, the conveyor modules 2 used with this configuration of connection assembly 200 have the control mechanism 28 offset with respect to a centre of the conveyor module 2, for example as shown in Figures 1 and 2.

While the foregoing is directed to exemplary embodiments of the present invention, it will be understood that the present invention is described herein purely by way of example, and modifications of detail can be made within the scope of the invention. Indeed, other and further embodiments of the invention will be apparent to those skilled in the art from consideration of the specification, and may be devised without departing from the basic scope thereof, which is determined by the claims that follow.

## Claims

1. A connection assembly for providing an electrical connection to a plurality of conveyor modules in a conveying system, the connection assembly comprising:
a first housing part and a second housing part arranged to at least partially encapsulate a plurality of electrical components; and
a plurality of apertures provided on the first housing part, wherein each aperture is associated with at least one of the plurality of electrical components,
wherein the first and second housing parts each have an elongate configuration and wherein the plurality of apertures are spaced apart along the first housing part such that each of the received conveyor modules are arranged in a row
wherein each aperture is configured to receive a part of a conveyor module to facilitate electrical connection of each of the plurality of conveyor modules to at least one of the plurality of electrical components.

2. The connection assembly according to claim 1 wherein each aperture forms part of an electrical socket configured to establish an electrical connection with an electrical connector of a conveyor module such that electrical communication is established between the conveyor module and at least one of the electrical components.

3. The connection assembly of claim 1 or claim 2 wherein each aperture is centrally located with respect to the width of the first housing part.

4. The connection assembly of any preceding claim wherein each aperture comprises a raised perimeter.

5. The connection assembly of any preceding claim wherein the first and second housing parts are arranged to be attached together using an interlocking hook arrangement, preferably wherein the interlocking hook arrangement extends along at least part of the length of both the first and second housing parts.

6. The connection assembly of any preceding claim wherein the plurality of electrical components are alternately arranged such that the orientation of adjacent electrical components is different.

7. The connection assembly of any preceding claim wherein the connection assembly comprises a plurality of connectors configured to attach the connection assembly to a conveying frame of a conveying system.

8. The connection assembly of claim 7 wherein the plurality of connectors are located on the first housing part.

9. The connection assembly of claim 7 or claim 8 wherein the plurality of connectors are arranged in pairs along at least part of the length of the first housing part.

10. The connection assembly of any of claims 7 to claim 9 wherein the connectors and apertures are alternately arranged along at least part of the length of the first housing part.

11. A conveyor module arranged to form a connection with a connection assembly according to any of claims 1 to 10, wherein the conveyor module comprises:
at least one rotatable element comprising an engagement surface configured to engage with a surface of an object to be conveyed;
a driving mechanism configured to rotate the at least one rotatable element such that rotation of the at least one rotatable element causes rotation of the engagement surface and thereby movement of the object; and
a control mechanism configured to control rotation of the rotatable element;
wherein the driving mechanism and the control mechanism are arranged in vertical alignment.

12. The conveyor module of claim 11 wherein at least part of the control mechanism is arranged to be received by an aperture in the connection assembly.

13. The conveyor module of claim 11 or claim 12 further comprises a casing, wherein the casing is configured to at least partially house the control mechanism and at least partially house the driving mechanism.

14. The conveyor module of claim 13 wherein the control mechanism extends at least partially through the casing and is arranged to form an electrical connection to at least one of the plurality of electrical components of the connection assembly.

15. The conveyor module of any of claims 11 to 14 further comprising a through passageway extending between a first opening in a top part of the conveyor module and second opening in a chute, the chute configured to extend away from the conveyor module, preferably wherein the chute extends across less than half the length of a side of the conveyor module.
